# EUROPEAN PATENT SPECIFICATION

(11) **EP 3 048 756 B1**
(45) Date of publication and mention of the grant of the patent: **11.09.2019**
(21) Application number: 14785394.9
(22) Date of filing: 17.04.2014
(51) Int. Cl.: H04L 12/24, H04L 29/12

(54) **MANAGEMENT METHOD AND APPARATUS FOR DYNAMIC HOST CONFIGURATION PROTOCOL SERVER AND RELAY**
VERWALTUNGSVERFAHREN UND -VORRICHTUNG FÜR EINEN DHCP-SERVER UND EIN RELAIS
PROCÉDÉ ET APPAREIL DE GESTION POUR SERVEUR ET RELAIS SOUS PROTOCOLE DE CONFIGURATION DYNAMIQUE D'HÔTES

(30) Priority: 16.09.2013 CN 201310422891
(43) Date of publication of application: 27.07.2016
(73) Proprietor: ZTE Corporation, Guangdong Province 518057 (CN)
(72) Inventor: GU, Zhongyu, Shenzhen Guangdong Province 518057 (CN)
(74) Representative: Novagraaf Technologies
(86) International application number: PCT/CN2014/075603
(87) International publication number: WO 2014/169838

(56) References cited:
- CN-A- 101 047 639
- CN-A- 101 079 802
- CN-A- 101 136 946
- CN-A- 102 356 599
- ANDY BENNETT BERNIE VOLZ PROCESS SOFTWARE ANDREA WESTERINEN MICROSOFT: "DHCP Schema for LDAP; draft-ietf-dhc-schema-01.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, vol. dhc, no. 1, 1 October 1999 (1999-10-01), XP015017180, ISSN: 0000-0004
- Novell: "DNS/DHCP Administration Guide for Linux - Open Enterprise Server 2 SP3", , 31 July 2013 (2013-07-31), XP055292511, Provo, Utah 84606, USA Retrieved from the Internet: URL:https://www.novell.com/documentation/o es2/pdfdoc/ntwk_dnsdhcp_lx/ntwk_dnsdhcp_lx .pdf [retrieved on 2016-08-01]
- Dmtf: "DHCP client profile - DMTF standard DSP1037, version 1.0.3", , 23 February 2012 (2012-02-23), pages 1-31, XP055312060, Retrieved from the Internet: URL:http://www.dmtf.org/sites/default/file s/standards/documents/DSP1037_1.0.3.pdf [retrieved on 2016-10-19]
- DMTF: "DHCP Service Management Profile - DSP 1068 - version 1.0.0c", , 12 January 2016 (2016-01-12), XP055312067, Retrieved from the Internet: URL:http://www.dmtf.org/sites/default/file s/standards/documents/DSP1068_1.0.0c.pdf [retrieved on 2016-10-19]

## Description

### Technical Field

The present disclosure relates to the field of communication, and in particular to a method and device for managing a Dynamic Host Configuration Protocol (DHCP) server and a method and device for managing a DHCP relay.

### Background

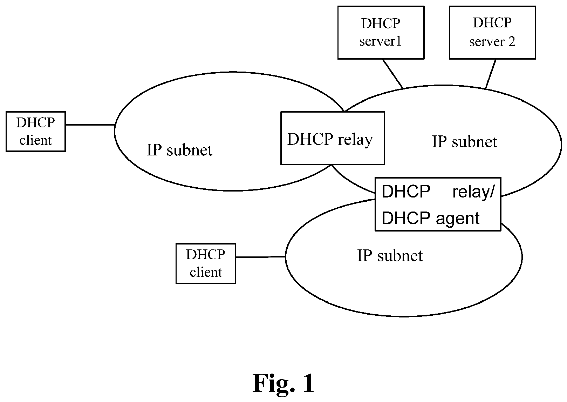

DHCP provides a function of allocating automatically Internet Protocol (IP) address for a host in a network, and by the function, a network user configuration function may be simplified. Fig. 1 is a diagram of an application of a DHCP networking according to a related art. As shown in Fig. 1, the DHCP networking comprises: a DHCP client, a DHCP server, a DHCP relay and a DHCP agent. The DHCP client discovers the DHCP server through broadcast information, and applies for an address, and the DHCP server allocates and returns an IP address to the DHCP client. The DHCP relay is configured to, when the DHCP server and the DHCP client are located in different subnets, forward a DHCP message of the DHCP client, thereby ensuring smoothness of automatic allocation of the IP address. The DHCP agent is a simplified DHCP server, and realizes an IP address allocation function of a local network.

The DHCP client may run in a terminal, such as a Personal Computer (PC), wherein the terminal is required to automatically obtain an IP address; the DHCP server may run in a server; and the DHCP relay may run in network equipment such as a router and/or a switch, and may also run in a computer. It is important to note that the DHCP relay and the DHCP agent may be confused sometimes in the industry, and are namely considered as the same concept; while in the present document, they represents different meanings and functions respectively. That is, the DHCP relay implements message forwarding between the DHCP client and the DHCP server; while the DHCP agent refers to that the DHCP agent not only comprises a capability of a DHCP server, but also comprises a capability of a DHCP client, and specifically, the DHCP agent communicates with the DHCP server through the DHCP client to obtain a scope of addresses which may be allocated by the DHCP agent as the DHCP server.

In the related art, at least one of DHCP server configuration and DHCP relay configuration is implemented by manual configuration, and the manual configuration is high in error rate and lower in efficiency.

The Document "ANDY BENNETT BERNIE VOLZ PROCESS SOFTWARE ANDREA WESTERINEN MICROSOFT: 'DHCP Schema for LDAP; draft-ietf-dhc-schema-01. txt' (XP015017180) " and the document " Novell: ' DNS/DHCP Administration Guide for Linux-Open Enterprise Server 2 SP3' (XP055292511) " provide the related technical solutions; however, the above mentioned problems are not covered in those documents.

### Summary

A method and device for managing a DHCP server and a method and device for managing a DHCP relay are provided in the embodiment of the present disclosure, so as to at least solve a problem caused by the fact that at least one of the DHCP server configuration, the DHCP relay configuration and a DHCP agent configuration is implemented by manual configuration in the related art.

According to one aspect of the embodiment of the present disclosure, a method for managing a Dynamic Host Configuration Protocol (DHCP) server is provided, comprising: defining a Common Information Model (CIM)-based DHCP server class; and a network management system configuring and managing, by a CIM management application mechanism, the DHCP server which implements the DHCP server class, wherein the DHCP server class comprises: a DHCP server core class, a DHCP server capability class and a DHCP server setting class, wherein the DHCP server capability class and the DHCP server setting class are associated with the DHCP server core class, and the DHCP server core class at least comprises following parameters: one or more Internet Protocol, IP addresses of the DHCP server, an allocable IP address segment and default lease time.

According to an example embodiment, the DHCP server class further comprises: a client class used for representing a DHCP client, wherein the client class comprises at least one of following parameters: an identifier of the DHCP client, a state of the allocated address, an allocated address, a type of the allocated address and lease time of the allocated address.

According to an example embodiment, the DHCP server capability class at least comprises a following parameter: a supporting capability of an Internet Protocol version 4/lnternet Protocol version 6 (IPv4/IPv6).

According to an example embodiment, the DHCP server class comprises: a DHCP service statistics class, the DHCP service statistics class comprising at least one of following parameters: the number of IP addresses requested and the number of IP addresses allocated.

According to an example embodiment, the method further comprises: defining a CIM-based DHCP relay class; and the network management system configuring and managing, by the CIM management application mechanism, a DHCP relay which implement the DHCP relay class, wherein the DHCP relay is configured to implement message forwarding between a DHCP client and the DHCP server.

According to an example embodiment, the DHCP relay class comprises: a DHCP relay core class, a DHCP relay capability class and a DHCP relay setting class, wherein the DHCP relay capability class and the DHCP relay setting class are associated with the DHCP relay core class.

According to an example embodiment, the DHCP relay core class comprises at least one of following parameters: an address of the DHCP relay, a supporting capability of a unicast and/or broadcast and an address of the DHCP server.

According to an example embodiment, the DHCP relay capability class at least comprises a following parameter: a supporting capability of an IPv4/IPv6.

According to an example embodiment, the DHCP relay class further comprises: a DHCP relay statistics class used for representing statistical data of the DHCP relay, the DHCP relay statistics class comprising at least one of following parameters: a relay interface, information of a network address of the relay interface, usage information of the relay interface and statistical information of DHCP messages.

According to another aspect of the embodiment of the present disclosure, a method for managing a Dynamic Host Configuration Protocol (DHCP) relay is provided, comprising: defining a Common Information Model (CIM)-based DHCP relay class; and a network management system configuring and managing, by a CIM management application mechanism, the DHCP relay which implements the DHCP relay class, wherein the DHCP relay is configured to implement message forwarding between a DHCP client and a DHCP server, wherein the DHCP relay class comprises: a DHCP relay core class, a DHCP relay capability class and a DHCP relay setting class, wherein the DHCP relay capability class and the DHCP relay setting class are associated with the DHCP relay core class, and the DHCP relay core class comprises at least one of following parameters: an address of a DHCP relay, a supporting capability of a unicast and/or broadcast and an address of the DHCP server.

According to an example embodiment, the DHCP relay capability class at least comprises a following parameter: a supporting capability of an Internet Protocol version 4/lnternet Protocol version 6 (IPv4/IPv6).

According to an example embodiment, the DHCP relay class further comprises: a DHCP relay statistics class used for representing statistical data of the DHCP relay, the DHCP relay statistics class comprising at least one of following parameters: a relay interface, information of a network address of the relay interface, usage information of the relay interface and statistical information of DHCP messages.

According to another aspect of the embodiment of the present disclosure, a method for managing a Dynamic Host Configuration Protocol (DHCP) server according to claim 10 is provided.

According to another aspect of the embodiment of the present disclosure, a method for managing a Dynamic Host Configuration Protocol (DHCP) relay according to claim 11 is provided.

According to another aspect of the embodiment of the present disclosure, a network management system according to claim 12 is provided.

According to an example embodiment, the communicating component is configured to communicate with the DHCP relay and/or the DHCP server through a Hyper Text Transfer Protocol (HTTP).

According to an example embodiment, the configuration and the management performed by the configuring and managing component comprises at least one of: interaction of configuration parameters, interaction of states, even notification and interaction of statistical information.

According to another aspect of the embodiment of the present disclosure, a Dynamic Host Configuration Protocol (DHCP) server according to claim 13 is provided.

According to an example embodiment, the communicating component is configured to communicate with the network management system through a Hyper Text Transfer Protocol (HTTP).

According to an example embodiment, the configuring and managing component is further configured to report state information of the DHCP server and/or statistical information of the DHCP server; and the processing component is further configured to generate the statistical information of the DHCP server, collect the state information of the DHCP server and/or generate event notification information.

According to another aspect of the embodiment of the present disclosure, a Dynamic Host Configuration Protocol (DHCP) relay according to claim 14 is provided.

According to an example embodiment, the communicating component is configured to communicate with the network management system through a Hyper Text Transfer Protocol (HTTP).

According to an example embodiment, the configuring and managing component is further configured to report state information of the DHCP relay and/or statistical information of the DHCP relay; and the processing component is further configured to generate the statistical information of the DHCP relay, collect the state information of the DHCP relay and/or generate event notification information.

According to another aspect of the embodiment of the present disclosure, a method for managing a Dynamic Host Configuration Protocol (DHCP) agent according to claim 15 is provided.

According to an example embodiment, the DHCP server capability class comprises at least one of following parameters: a supporting capability of an Internet Protocol version 4/lnternet Protocol version 6 (IPv4/IPv6) and a supporting capability of a DHCP agent.

According to an example embodiment, the DHCP server statistics class comprises at least one of following parameters: the number of Internet Protocol (IP) addresses requested, the number of IP addresses allocated and obtained batch IP addresses.

According to another aspect of the embodiment of the present disclosure, a Dynamic Host Configuration Protocol (DHCP) agent according to claim 16 is provided.

According to an example embodiment, the communicating component is configured to communicate with the network management system through a Hyper Text Transfer Protocol (HTTP).

According to an example embodiment, the configuring and managing component is further configured to report state information of the DHCP agent and/or statistical information of the DHCP agent; and the processing component is further configured to generate the statistical information of the DHCP agent, collect the state information of the DHCP agent and/or generate event notification information.

According to the embodiment of the present disclosure, the CIM-based DHCP server class is defined; and the network management system manages, by the CIM management application mechanism, the DHCP server which implements the DHCP server class, so as to implement the configuration and management on the DHCP server. The problem caused by the fact that at least one of DHCP server configuration, the DHCP relay configuration and the DHCP agent configuration is implemented by manual configuration in the related art is solved, and configuration efficiency is improved.

### Brief Description of the Drawings

The drawings described here are adopted to provide further understanding of the embodiment of the present disclosure, and form a part of the present disclosure. Schematic embodiments of the present disclosure and description thereof are adopted to explain the present disclosure and not intended to form improper limits to the present disclosure. In the drawings:
Fig. 1 is a diagram of an application of a DHCP networking according to the related art;
Fig. 2 is a diagram of a DHCP class of a DHCP client according to an embodiment of the present disclosure;
Fig. 3 is a flowchart of a method for managing a DHCP server according to an embodiment of the present disclosure;
Fig. 4 is a flowchart of a method for managing a DHCP relay according to an embodiment of the present disclosure;
Fig. 5 is a flowchart of another method for managing the DHCP server according to an embodiment of the present disclosure;
Fig. 6 is a flowchart of another method for managing the DHCP relay according to an embodiment of the present disclosure;
Fig. 7 is a structure diagram of a network management system according to an embodiment of the present disclosure;
Fig. 8 is a structure diagram of another network management system according to an embodiment of the present disclosure;
Fig. 9 is a structure diagram of a DHCP server according to an embodiment of the present disclosure;
Fig. 10 is a structure diagram of a DHCP relay according to an embodiment of the present disclosure;
Fig. 11 is a diagram of functions according to example embodiment 1 of the present disclosure;
Fig. 12 is a diagram of definition of a DHCP server/server class according to example embodiment 1 of the present disclosure;
Fig. 13 is a diagram of a CIM representation manner of another DHCP server according to an embodiment of the present disclosure;
Fig. 14 is a diagram of definition of a DHCP relay class according to an embodiment of the present disclosure;
Fig. 15 is another diagram of definition of a DHCP relay class according to an embodiment of the present disclosure;
Fig. 16 is a flowchart of a method for processing a DHCP agent according to an embodiment of the present disclosure; and
Fig. 17 is a structure diagram of another network management system according to an embodiment of the present disclosure.

### Detailed Description of the Embodiments

It is important to note that embodiments in the present disclosure and characteristics in the embodiments may be combined under the condition of no conflicts. The present disclosure will be described below with reference to the drawings and the embodiments in detail.

In the following embodiment, a CIM technology is adopted, and the CIM technology is simply introduced below: the Network Service Management Working Group (NSMWG) of the Distributed Management Task Force (DMTF) is discussing about a network management function under a CIM technical system, so as to implement automatic configuration and management of the network management function, specifically including virtual network management, network strategy management, routing protocol management and the like. However, there is yet no content about DHCP server management, so that a CIM definition related to the DHCP server management is given in the embodiment.

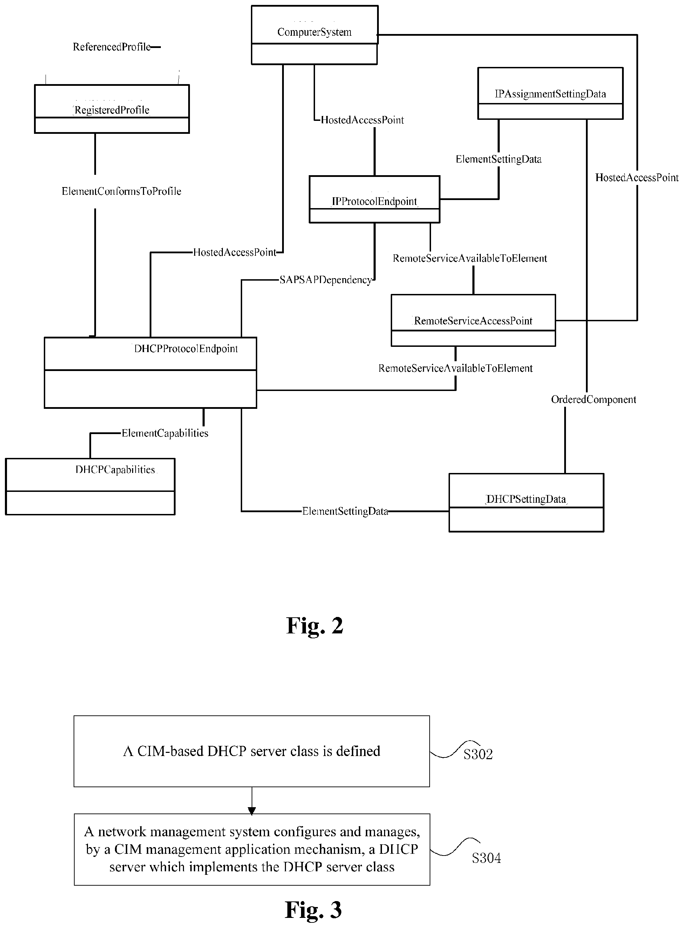

DHCP client management corresponds to the DHCP server management. At present, the DMTF has finished the specification of the DHCP client management: DSP1037-DHCP Client Profile. Fig. 2 is a diagram of definition of a related class of a DHCP client. The class shown in Fig. 2 comprises: a class DHCPProtocolEndPoint representative of the DHCP client and a class RemoteServiceAccessPoint representative of a DHCP server. Related parameters/information elements of the DHCP client are defined by DHCPCapabilities and DHCPSettingData. The DHCP client is further related to a specific IP interface, which is reflected through IPProtocolEndpoint in Fig. 2. In addition, in DSP1037, related parameter definitions and operation functions, application scenarios and the like are further given, so as to support the management over the DHCP client.

The related parameters of the DHCP client comprise:
the state of the DHCP client (ClientState), lease expires/the expired time (LeaseExpires), the obtained lease time (LeaseObtained), the lease time (LeaseTime), the rebinding time (RebindingTime), the renewal time (RenewalTime) and the received options (OptionsReceived);
an supporting capability of an IPv6, an option and the like; and
setting information such as the address origin (AddressOrigin), the identifier of a client (Clientldentifier), the requested IPv4 address (Requested IPv4Address), the requested lease time (RequestedLeaseTime), the identifier of a vendor class (VendorClassldentifier), the requested options (RequestedOptions) and the received required options (Required Options).

RemoteServiceAccessPoint related to the DHCP server only represents an IP address of the DHCP server through one attribute Accesslnfo of RemoteServiceAccessPoint.

The DHCP server and the DHCP client realize different functions, so that DDSP1037 may not realize the management function of the DHCP server, and may also not give a related realization prompt.

A method for processing a DHCP server is provided in the embodiment of the present disclosure, Fig. 3 is a flowchart of the method for processing the DHCP according to an embodiment of the present disclosure, and as shown in Fig. 3, the flow comprises the following steps:
Step 302: a CIM-based DHCP server class is defined; and
Step 304: a network management system configures and manages, by a CIM management application mechanism, the DHCP server which implements the DHCP server class.

By the steps, a CIM is adopted to model the DHCP server to obtain a DHCP server model; and one or more DHCP servers are configured and managed through the DHCP server models on the one or more DHCP servers. By the example implementation mode, DHCP server configuration efficiency may also be improved.

The DHCP server model may involve different classes according to a practical requirement, and description will be given below with reference to several example classes involved in the DHCP server model.

In an exemplary embodiment, the DHCP server class comprises: a DHCP server core class (in the embodiment, the DHCP server core class may be called DHCPServiceProtocolEndpoint, but the name of the DHCP server core class is not intended to limit the DHCP server core class), and a DHCP server capability class (in the embodiment, the DHCP server capability class may be called DHCPServiceCapabilities, but the name of the DHCP server capability class is not intended to limit the DHCP server capability class) and a DHCP server setting class (in the embodiment, the DHCP server setting class may be called DHCPServiceSetting Data, but the name of the DHCP server setting class is not intended to limit the DHCP server setting class), wherein the DHCP server capability class and the DHCP server setting class are associated with the DHCP server core class.

In an exemplary embodiment, the DHCP server core class may at least comprise the following parameters: one or more IP addresses of the DHCP server, an allocable IP address segment and default lease time.

In an exemplary embodiment, the DHCP server class may further comprise: a client class used for representing a DHCP client, wherein the client class may comprises at least one of the following parameters: an identifier of the DHCP client, a state of the allocated address, an allocated address, a type of the allocated address and lease time of the allocated address.

In an exemplary embodiment, the DHCP server capability class at least comprises the following parameter: a supporting capability of an IPv4/IPv6.

In an exemplary embodiment, the DHCP server class may further comprise: a DHCP service statistics class, and the DHCP service statistics class may comprise at least one of the following parameters: the number of IP addresses requested and the number of IP addresses allocated.

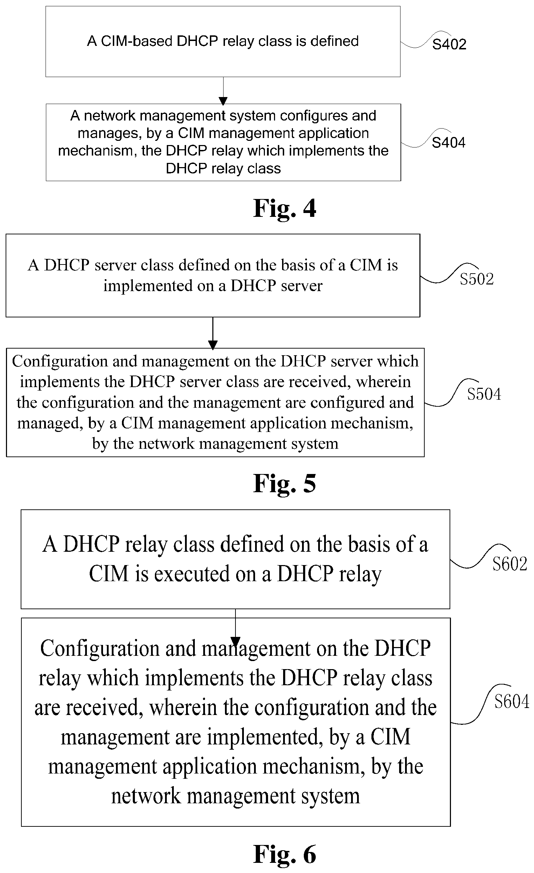

The above embodiment provides the configuration and management over the DHCP sever, and as another example implementation mode, a DHCP relay may further be configured and managed. Fig. 4 is a flowchart of a method for processing a DHCP relay according to an embodiment of the present disclosure, and as shown in Fig. 4, the flow comprises the following steps:
Step 402: a CIM-based DHCP relay class is defined; and
Step 404: a network management system configures and manages, by a CIM management application mechanism, the DHCP relay which implements the DHCP relay class, wherein the DHCP relay is configured to implement message forwarding between a DHCP client and a DHCP server.

By the steps, the CIM is adopted to model the DHCP relay to obtain a DHCP relay model; and the DHCP relay is configured and managed through the DHCP relay model on the DHCP relay. By the example implementation mode, DHCP relay configuration efficiency may also be improved.

The DHCP relay model may involve different classes according to a practical requirement, and description will be given below with reference to several example classes involved in the DHCP relay model.

In an example embodiment, the DHCP relay class comprises: a DHCP relay core class, a DHCP relay capability class and a DHCP relay setting class, wherein the DHCP relay capability class and the DHCP relay setting class are associated with the DHCP relay core class.

In an example embodiment, the DHCP relay core class comprises at least one of the following parameters: an address of the DHCP relay, a supporting capability of a unicast and/or broadcast and an address of the DHCP server.

In an example embodiment, the DHCP relay capability class at least further comprises the following parameter: a supporting capability of an IPv4/IPv6.

In an example embodiment, the DHCP relay class further comprises: a DHCP relay statistics class used for representing statistical data of the DHCP relay, the DHCP relay statistics class comprising at least one of the following parameters: a relay interface, information of a network address of the relay interface, usage information of the relay interface and statistical information of DHCP messages.

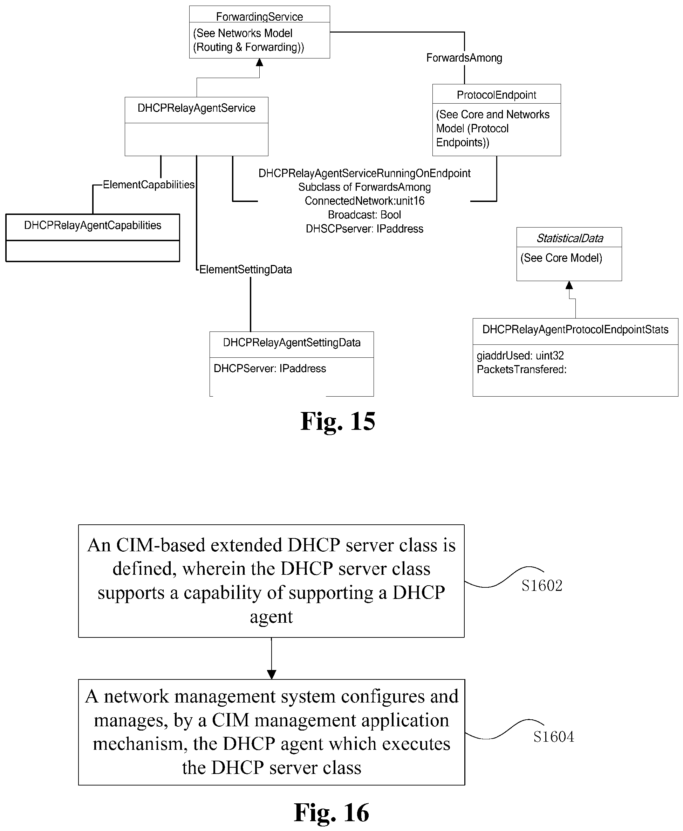

The above embodiment provides the configuration and management on the DHCP server and/or the DHCP relay, and as another example implementation mode, a DHCP agent may also be configured and managed. A method for managing a DHCP agent is provided in the embodiment of the present disclosure, Fig. 16 is a flowchart of the method for managing the DHCP agent according to an embodiment of the present disclosure, and as shown in Fig. 16, the method comprises the following steps:
Step 1602: a CIM-based extended DHCP server class is defined, wherein the extended DHCP server class supports a capability of the DHCP agent; and
Step 1604: the network management system configures and manages, by the CIM management application mechanism, the DHCP agent which implements the extended DHCP server class.

By the steps, the CIM is adopted to model the DHCP agent to obtain a DHCP agent model; and the DHCP agent is configured and managed by the DHCP agent model on the DHCP agent. By the example implementation mode, DHCP agent configuration efficiency may also be improved.

In an exemplary embodiment, the DHCP server class comprises at least one of: a DHCP server core class, a DHCP server capability class, a DHCP server setting class, and a DHCP server statistics class, wherein the DHCP server capability class and the DHCP server setting class and the DHCP server statistics class are associated with the DHCP server core class.

In an exemplary embodiment, the DHCP server capability class comprises at least one of the following parameters: a supporting capability of an IPv4/IPv6 and a supporting capability of a DHCP agent.

In an exemplary embodiment, the DHCP server statistics class comprises at least one of the following parameters: the number of IP addresses requested, the number of IP addresses allocated and obtained batch IP addresses.

Step 304 and Step 404 in Fig. 3 and Fig. 4 are described from the angle of the network management system, Fig. 5 and Fig. 6 correspond to Fig. 3 and Fig. 4 respectively, and the difference is that the description is given from the angle of the DHCP server and the DHCP relay in Fig. 5 and Fig. 6 respectively.

Fig. 5 is a flowchart of another method for managing a DHCP server according to an embodiment of the present disclosure, and as shown in Fig. 5, the flow comprises the following steps:
Step 502: a DHCP server class defined on the basis of a CIM is implemented on a DHCP server; and
Step 504: configuration and management on the DHCP server which implements the DHCP server class are received, wherein the configuration and management are performed, by a CIM management application mechanism, by network management system.

Fig. 6 is a flowchart of another method for managing a DHCP relay according to an embodiment of the present disclosure, and as shown in Fig. 6, the flow comprises the following steps:
Step 602: a DHCP relay class defined on the basis of a CIM is implemented on the DHCP relay; and
Step 604: configuration and management on the DHCP relay which implements the DHCP relay class are received, wherein the configuration and management are performed by a CIM management application mechanism, by a network management system.

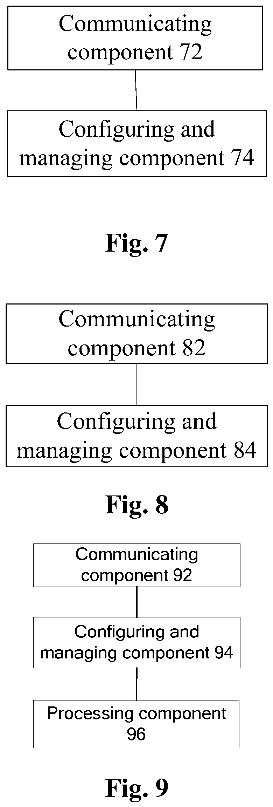

Referring to the steps in Fig. 3, a network management system is further provided in the embodiment, Fig. 7 is a structure diagram of a network management system according to an embodiment of the present disclosure, and as shown in Fig. 7, the structure comprises:
a communicating component 72, configured to communicate with a DHCP server; and
a configuring and managing component 74, configured to manage, by a CIM management application mechanism, the DHCP server which implements a DHCP server class, so as to implement configuration and management on the DHCP server, wherein the DHCP server class is defined on the basis of a CIM.

Referring to the steps in Fig. 4, another network management system is further provided in the embodiment, Fig. 8 is a structure diagram of the another network management system according to an embodiment of the present disclosure, and as shown in Fig. 8, the structure comprises:
a communicating component 82, configured to communicate with a DHCP relay; and
a configuring and managing component 84, configured to configure and manage, by a CIM management application mechanism, the DHCP relay which implements a DHCP relay class, wherein the DHCP relay class is defined on the basis of a CIM.

In an exemplary embodiment, the communicating component 82 is configured to communicate with the DHCP relay and/or a DHCP server through an HTTP.

In an exemplary embodiment, the management on the DHCP server and/or the DHCP relay performed by the configuring and managing component 84 comprises at least one of: interaction of configuration parameters, interaction of states of the DHCP server and/or the DHCP relay and interaction of statistical information of the DHCP server and/or the DHCP relay.

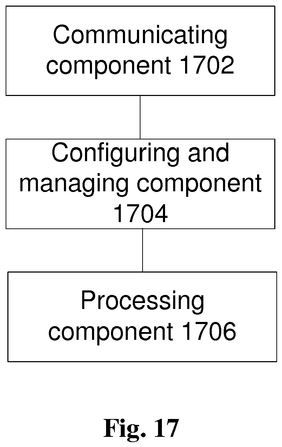

Another network management system is further provided in the embodiment. The structure of the network management system is configured to communicate with a DHCP agent, the structure is similar to the structures involved in Fig. 7 and Fig. 8, Fig. 17 is a structure diagram of another network management system according to an embodiment of the present disclosure, and as shown in Fig. 17, the structure comprises:
a communicating component 1702, configured to communicate with the network management system;
a configuring and managing component 1704, configured to receive configuration and management on a DHCP agent by implementing a DHCP server class on the DHCP agent, wherein the DHCP server class is defined on the basis of a CIM, and the DHCP server class supports a capability of the DHCP agent; and
a processing component 1706, configured to realize a function of the DHCP agent.

In an exemplary embodiment, the communicating component 1702 is configured to communicate with the network management system through an HTTP.

In an exemplary embodiment, the configuring and managing component 1704 is further configured to report state information of the DHCP agent and/or statistical information of the DHCP agent; and the processing component 1706 is further configured to generate the statistical information of the DHCP agent, collect the state information of the DHCP agent and/or generate event notification information.

The configuring and managing components involved in the abovementioned embodiments may be implemented by two components.

Referring to the steps in Fig. 5, a DHCP server is further provided in the embodiment of the present disclosure, Fig. 9 is a structure diagram of a DHCP server according to an embodiment of the present disclosure, and as shown in Fig. 9, the structure comprises:
a communicating component 92, configured to communicate with a network management system;
a configuring and managing component 94, configured to receive configuration on the DHCP server by implementing a DHCP server class on the DHCP server, wherein the DHCP server class is defined on the basis of a CIM; and
a processing component 96, configured to realize a function of the DHCP server.

In an exemplary embodiment, the communicating component 92 is configured to communicate with the network management system through an HTTP.

In an exemplary embodiment, the configuring and managing component 94 is further configured to report state information of the DHCP server and/or statistical information of the DHCP server; and the processing component 96 is further configured to generate the statistical information of the DHCP server, collect the state information of the DHCP server and/or generate event notification information.

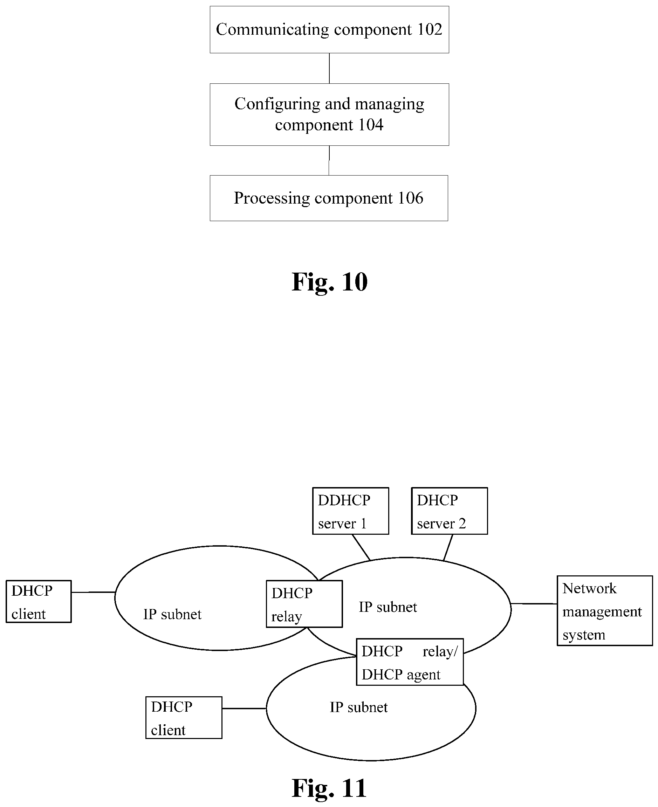

Referring to the steps in Fig. 6, a DHCP relay is further provided in the embodiment of the present disclosure, Fig. 10 is a structure diagram of a DHCP relay according to an embodiment of the present disclosure, and as shown in Fig. 10, the structure comprises:
a communicating component 102, configured to communicate with a network management system;
a configuring and managing component 104, configured to receive configuration and management on the DHCP relay by implementing a DHCP relay class on the DHCP relay, wherein the DHCP relay class is defined on the basis of a CIM; and
a processing component 106, configured to realize a function of the DHCP relay.

In an exemplary embodiment, the communicating component 102 is further configured to communicate with the network management system through an HTTP.

In an exemplary embodiment, the configuring and managing component 104 is further configured to report state information of the DHCP relay and/or statistical information of the DHCP relay; and the processing component 106 is further configured to generate the statistical information of the DHCP relay, collect the state information of the DHCP relay and/or generate event notification information.

The classes involved in the abovementioned devices have been described in detail, and will not be elaborated herein.

The present disclosure will be described below with example embodiments.

In the following example embodiments, a function of configuring and managing a DHCP server under a general background of network management automation is provided, and the function supports, by CIM-based architecture definition, the automatic configuration and management. That is, related classes and related CIM information elements of a DHCP server/service, method classes and the like are defined, and a method for implementing the automatic configuration and management of the DHCP server/service is provided on the basis of an existing CIM-based application implementation system.

In the following embodiments, a DHCP server and a network management system are involved, wherein the architecture of the DHCP server class is similar to the architecture of the DHCP client class DHCPProtocolEndPoint, but the DHCP server class comprises different information elements.

A definition of the DHCP server class comprises: DHCPServerProtocolEndPoint or DHCPServiceProtocolEndpoint (in the description below, only DHCPService is adopted for simple representation, DHCPServer may also be adopted for representation, and DHCPServer and DHCPService may be exchanged for use. In addition, DHCPServer or DHCPService may be directly adopted to represent the DHCP server without adding ProtocolEndpoint. That is, the DHCP service may be directly derived from a Service class in the CIM mechanism.), which is a DHCP server core class, a DHCPService capability class and a DHCPService setting class, wherein the DHCPService capability class and the DHCPService setting class are corresponding thereto/associated with the DHCP server core class, and are represented by DHCPServiceCapabilities and DHCPServiceSettingData respectively.

Fig. 11 is a diagram of functions according to example embodiment 1 of the present disclosure, and as shown in Fig. 11, compared with Fig. 1, a network management system function entity is added. Management on the DHCP server is implemented by the network management system function entity.

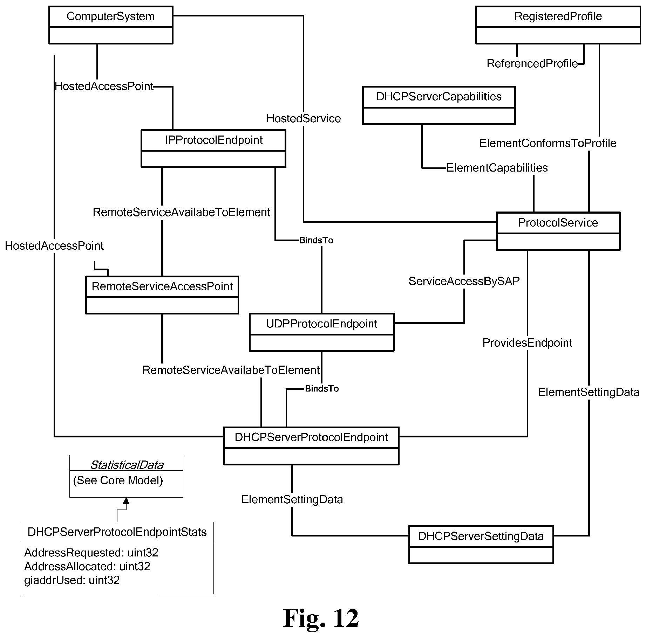

Fig. 12 is a diagram of definition of a DHCP server/server class according to example embodiment 1 of the present disclosure. In Fig. 12, a DHCP server core class DHCPService is comprised, DHCPServer may also be adopted for identification, the difference is just the name, and there is no influence on substantial content of the embodiment of the present disclosure.

Wherein, the DHCP server core class is represented by DHCPServerProtocolEndpoint. A reference system implementing the DHCP server core class is a computer here, and each related function of the DHCP server is supported/realized, specifically including: functions of IP address allocation, related configuration and management and the like.

Adoption of a static configuration method is suggested for allocation of an IP address of the DHCP server. Of course, a DHCP method may also be adopted, that is, the IP address of the DHCP server is also obtained through a DHCP mechanism, which may theoretically be implemented but is usually not suggested during practical network deployment. In the process, definition is implemented through an existing IP interface specification (DSP1036) in a CIM. It is important to note that for a certain reason, for example, a reason of meeting possible traffic for which a large number of users apply, the DHCP server may comprise multiple IP interfaces, so that the DHCP may own multiple IP addresses. These addresses point to the same DHCP server.

After the address of the DHCP server is determined and related functions and some initial settings of the DHCP server are started, the DHCP server may provide service for allocating automatically IP address.

The managements, related specific settings on the DHCP server further comprise: a capability of the DHCP server, for example, a supporting capability of the allocation of IPv4 and IPv6 addresses; and a scope AddressScope of the IP addresses which may be provided. These are represented through the corresponding classes in Fig. 6. Specifically, DHCPServiceCapabilities represents the capability of the DHCP server, and DHCPServiceSettingData represents setting data of the DHCP server.

Other related information of the DHCP server further comprises: lease time of the IP address of the client, default lease time, renewal time of the IP address of the client, rebinding time of the IP address of the client and the like.

A main function of DHCP is to allocate IP addresses to clients applying for the IP addresses. In an existing technical system, it is realized by monitoring a User Datagram Protocol (UDP) port 67, that is, related information of a DHCP client is acquired through the UDP port 67, and the server returns the related information through another port 68. This is reflected through UDPProtocolEndpoint in Fig. 6. Optionally, a definition of the UDPProtocolEndpoint class may be omitted from the figure.

For the DHCP server, the following information of a client is usually required to be processed, including: DHCPDISCOVER, DHCPREQUEST, DHCPDECLINE, DHCPRELEASE, DHCPINFORM and the like.

In general, as for one application of a user for an IP address, the DHCP server may be in the following main states.
First: when the DHCP client does not subsequently select the IP address which is provided by the DHCP server, the IP address of the DHCP server should also be available for subsequent application, and state identification is required.
Second: when the IP address provided by the DHCP server is selected by the DHCP client for address provision, the IP address should be identified to have been allocated, and the IP address may not be allocated to another user. Furthermore, it is necessary to store lease time information of the address, related renewal time of the IP address of the client and rebinding time information of the IP address of the client.
Third: the address of the DHCP client is not allocated by the DHCP server, but it is necessary to obtain other related configuration parameters for registration. The DHCP server performs related processing.

In order to implement IP address allocation and management, related information of the DHCP client/user is usually stored in the DHCP server. Specifically, the related information usually comprises: identification information of the DHCP client, information of the allocated IP address, related lease time information and the like.

In the DHCP server, there may be multiple different representation manners for representing the DHCP client.

As shown in Fig. 12, a representation manner for representing the DHCP client is provided, that is, the DHCP client is represented/implemented by RemoteServiceAccessPoint. One DHCP client specifically comprises a RemoteServiceAccessPoint example. Specifically, the DHCP server implements association through RemoteServiceAvailabeToElement. Whether the IP address has been allocated or not is represented by a RemoteServiceAvailabeToElement attribute-AddressAllocated attribute. Specifically, when a value of AddressAllocated is True/1, it is indicated that the address has been allocated; and when the value is false/0, it is indicated that the DHCP server provides the address for the DHCP client but the DHCP client does not select the address provided by the server.

Other attributes of the client RemoteServiceAccessPoint comprise: an identifier of the DHCP client or a hardware address, and the information is defined in the DHCP specification. Here, related information elements are further introduced in a CIM architecture to implement dynamic and automatic configuration and management of DHCP. The information should be stored in the DHCP server for subsequent related processing.

In addition, in order to monitor a running state of the DHCP server, it is necessary to define a state information class and related information element of the DHCP server.

In an example embodiment, the state information of the DHCP server should further comprise allocation information of the related IP address, statistical information of using condition of the related IP address, client information of the related DHCP client, registration frequency of the related DHCP client and the like.

These state information and further statistical information are represented by an associated class DHCP service statistics class DHCPServerProtocolEndpointStates/DHCPServerStats of the DHCP server class. The DHCP server statistics class comprises at least one of the following parameters: the number of IP addresses requested, the number of IP addresses allocated and the client information of the DHCP client.

Due to importance of a DHCP function, the DHCP server in a network must keep continuously running, otherwise the normal network function may be influenced. Therefore, multiple DHCP servers may usually be deployed in the network, and a basic strategy is that two DHCP servers which serve as backup of each other are deployed. That is, under the condition that there are multiple DHCP servers in the network, it is necessary to make a certain strategy consideration about setting of an address scope, and for example, the address scope of the DHCP servers serving two different subnets is divided into two segments, wherein the most of addresses belongs to the master server, and a smaller address scope belongs to the master server, so that the standby server may still work for IP address allocation under the condition that the master server fails, and the network function is ensured, and may be continuously realized. Therefore, the DHCP server should be provided strategy information for address backup to specifically indicate whether the DHCP server is in a master state or a standby state. In such a manner, more complete information of the DHCP server may be displayed.

In an exemplary embodiment, much DHCPDISCOVER information of the DHCP server is forwarded through a DHCP relay, so that the DHCP server optionally needs to set a DHCP relay class for statistics about a using condition of the DHCP relay, or the DHCP server may make statistics about related information of the DHCP relay, specifically including, but not limited to: the number of DHCP relays and the like.

According to the abovementioned contents, definition about the related classes of the DHCP server and the related information elements are simply summarized. Specifically, the information elements of the DHCP server class comprise, but not limited to: the address of the DHCP server, the scope of the IP address, the state of the DHCP client, the state of the DHCP relay, the state of the DHCP server and the statistical information of the DHCP server. Definition of the information elements related to the class RemoteServiceAccessPoint of the DHCP client in the DHCP server comprises, but not limited to: the identifier of the DHCP client, or the hardware address of the DHCP client, address allocation state information, the allocated IP address and the lease time. DHCPServiceCapabilities comprises, but not limited to: a supporting capability of IPv4/IPv6. DHCPServiceSettingData comprises, but not limited to: the address of the DHCP server, the scope of the IP address and the default lease time of the IP address.

The DHCP server class may be implemented by the server running a CIM application after being defined. A CIM-based network management system may communicate with the server running the CIM application, thereby realizing the function of configuring and managing the DHCP server. After the DHCP server is started, related information of the DHCP server may be monitored from a specific UDP port, and the DHCP function is further realized.

### Embodiment 2: another implementation method of the DHCP server class

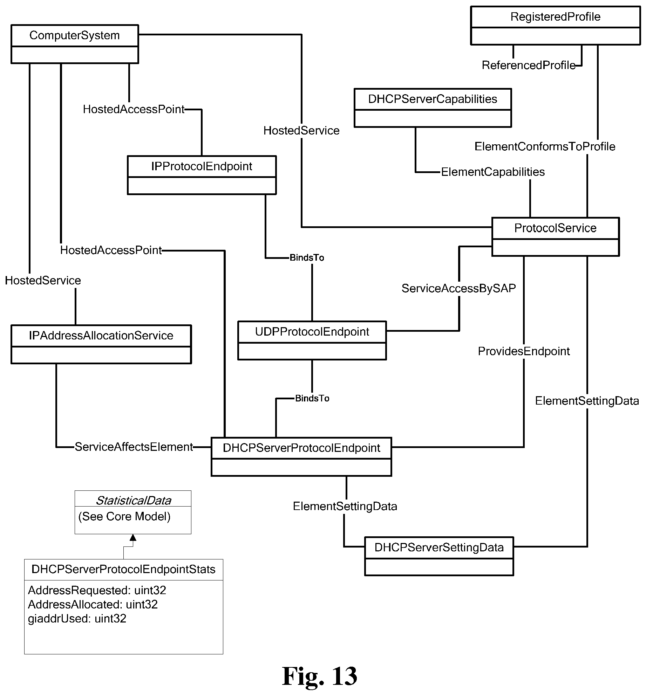

Fig. 13 shows another CIM representation manner of the DHCP server, wherein, an IP address allocation service class is introduced. An IP addresses requested by a DHCP client is implemented through related parameters of the IP address allocation service class. It is mainly considered that embodiment 1 of the present disclosure is further optimized by storing address allocation information of the DHCP client in a centralized manner, so as to save a storage space and management cost of the class.

It is important to note that related information of the client is not displayed in the figure, wherein the related information of the client may comprise client information represented by RemoteServiceAccessPoint, which is associated with the DHCP server class through RemoteServiceAvailabeToElement.

In an example embodiment, the related information of the DHCP client is stored in the IP address allocation service class, and specifically comprises, but not limited to: an identifier of the DHCP client, and/or a hardware address of the DHCP client, a state of the allocated address, an allocated IP address, an address lease time period, address renewal time, and address rebinding time.

In an example embodiment, DHCPServerProtocolEndpointStats represents state information and statistical information of a protocol terminal of the DHCP server.

### Embodiment 3: implementation of management on a DHCP relay

A DHCP technical system comprises a function of a DHCP relay, which is usually realized through a router or a switch and may also be realized through a computer under some specific conditions. The DHCP relay is important for normal running of DHCP, and a DHCP relay management function is lack in a CIM, so that a CIM-based DHCP relay configuration/management implementation solution to network equipment such as a router or a switch is provided in the embodiment. That is, definition of starting, configuration and management on a DHCP relay agent function are implemented in a CIM technical system.

In an example embodiment, information elements of a CIM class of a DHCP relay agent on network equipment such as a router, and information elements of a class related to the CIM class are involved, and definition of a related operation method is given.

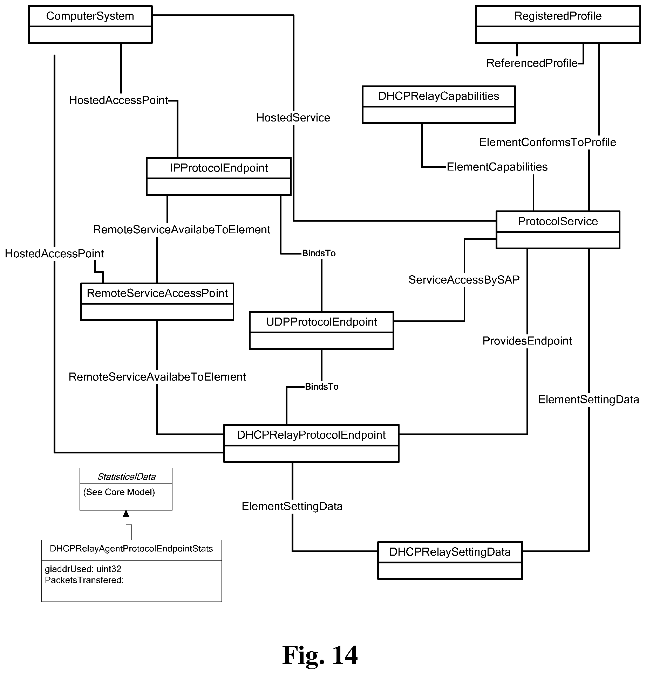

Fig. 14 shows a definition about a DHCP relay class. In the figure, three main DHCP relay related classes are involved, wherein DHCPRelayProtocolEndpoint is a main DHCP relay class, which is used for representing the DHCP relay; and DHCPRelaySettingData and DHCPRelayCapabilities respectively represent definition of a setting class and a capability class and related parameters of the DHCP relay.

It is important to note that DHCPRelayProtocolEndpoint in the figure may also be represented as DHCPRelayAgentProtocolEndpoint, or DHCPRelayService, or DHCPRelayAgentService, the difference is just the name, and there is no influence on substantial content of the embodiment of the present disclosure. The names of the other two classes may be similarly represented.

In an exemplary embodiment, DHCPRelayCapabilities comprises, but not limited to: a supporting capability of an IPv4 or IPv6.

Information elements of DHCPRelaySettingData comprise, but not limited to: a supporting capability of a multicast/unicast; and an IP address of the DHCP server.

In an exemplary embodiment, the DHCPRelayService class comprises a capability of enabling a DHCP relay function or a capability of disabling the DHCP relay function. That is, a DHCP relay function in the network equipment is enabled or disabled according to a network deployment requirement. According to the CIM technical system, the DHCP relay function may be obtained from a related derivative class.

The DHCP relay is required to be associated with related interface information. Related interface information may be transmitted and used as giaddr (gateway IP address) parameters, and related processing is performed according to parameter conditions of DHCP related message (these contents all belong to a related art, and the following content are described only for completeness of the solution without influence the content of the embodiment of the present disclosure). Specifically, a DHCP message is monitored through an IP endpoint on network equipment, and is transmitted to a DHCP relay function together with an IP address of an interface which receives the message. The message is forwarded after certain IP address processing. The DHCP message is forwarded through a unicast function or a broadcast function. A response message returned by the DHCP server is sent to the related interface according to address information and the like in the message, thereby implementing relay processing.

Brief description will be made below with reference to the abovementioned DHCP setting data condition. Under the condition that the DHCP relay is set into broadcast, the DHCP relay employs the interface address which receives the message as a giaddr address of a new message and forwards the message by broadcasting under the condition that an IP address of a user is 0 or the giaddr address is 0. Under the condition that the DHCP relay is set into unicast and the address of the DHCP server is set, the new message is forwarded to the DHCP server by a unicast manner.

Since these functions may not be known by the management system, information elements of the CIM may not be defined. However, from the aspect of better management and monitoring capability realization, it is also necessary to define the related processing functions and further statistical information of the DHCP relay.

In an exemplary embodiment, definition may be made through a DHCPRelayServiceStat (DHCP relay service statistics) class. Specifically, information elements of DHCPRelayServiceStat may comprise: a relay interface and related address information; usage information of the interface; statistical information of different types of DHCP messages; and the like.

The DHCP relay class may also be defined by another method, as shown in Fig. 15. The DHCP relay class DHCPRelayService is a subclass of forwarding service class ForwardingService, and implements direct forwarding of a DHCP relay message at different interfaces. A specific forwarding function is realized in a manner that: the DHCP relay employs an interface address by which the DHCP message is received as a giaddr address of a new message and forwards the received message by broadcasting under the condition that the DHCP relay is set into broadcast and the IP address of the user is 0 or the giaddr address is 0. Under the condition that the DHCP relay is set into unicast and the address of the DHCP server is set, the new message is forwarded to the DHCP server by a unicast manner.

DHCPRelayService is associated with a related connecting interface through DHCPRelayAgentServiceRunningOnEndpoint, a connecting relationship between the DHCP relay and the interface is defined by ConnectedNetwork, and specifically, one value of ConnectedNetwork represents connection with an external network interface, and another value represents connection to an internal network interface.

It is important to note that a supporting capability of multicast/unicast and the IP address of the DHCP server, which are defined in DHCPRelayAgentServiceRunningOnEndpoint, may also be defined in DHCPRelaySettingData.

DHCPRelayAgentProtocolEndpointStats in Fig. 14 and Fig. 15 represents state information and statistical information of a protocol terminal of the DHCP relay agent.

During implementation, the related class may be generated on a related router, specifically, the related DHCP relay class may be generated by InstanceCreation. After related initial setting, a related function is started to implement forwarding processing of the DHCP message, thereby ensuring smooth realization of the DHCP function in the network.

In an exemplary embodiment, the router may report to the network management system that there is a DHCP relay function on the router after initial configuration. The network management system selects a specific router according to a specific deployment condition of the network, and starts the DHCP relay function of the router.

It is important to further note that the DHCP relay function may also be realized through a computer in the embodiment. A realization solution is the same as the abovementioned realization solution for the DHCP relay function of the switch or the router.

### Embodiment 4: method for managing a DHCP agent

As mentioned before, the DHCP agent has a capability of the DHCP server, and further comprises a capability of the DHCP client. Management on the DHCP agent may not be implemented by simply combining the DHCP server class and DHCP client class defined in the embodiment of the present disclosure. It is necessary to associate the two classes to implement the management on the DHCP agent.

In general, there may be two solutions. One is to implement management by a method of extending a CIM-based DHCP server, and the other is to define a new DHCP agent class.

According to the extension solution, an option, an attribute or information element supporting a DHCP agent function, is added to the capability class of the DHCP server class. Under an enabled condition, the DHCP agent obtains through the DHCP client a batch of IP addresses rather than an IP address corresponding to a basic DHCP client function. There are also two implementation solutions. One is that the DHCP agent may call the DHCP client for many times to obtain multiple IP addresses; and the other is that application for IP addresses is made in batches, which requires to extend the DHCP function, that is, it is required to add the option of the number of applied IP addresses and the option of an IP address list.

After obtaining the IP addresses through the DHCP client, the DHCP agent takes the obtained addresses as the allocable address scope of the DHCP server for allocation.

In an exemplary embodiment, the DHCP agent may initiate an IP address application process of the DHCP client for many times to apply for multiple batches of IP addresses under the condition that a large number of clients apply for the IP addresses.

In an exemplary embodiment, the setting class of the DHCP server class may be extended, including: an option of setting a capability of the DHCP agent.

In an exemplary embodiment, for the statistics class of the DHCP server class, support to the DHCP agent is required to be further extended, and comprised option parameters comprise, but not limited to, one or more of: execution times of an address application of the DHCP client.

A method for defining the new DHCP agent class is similar to the implementation method for defining the DHCP server class. Specifically, a CIM-based DHCP agent class is defined, and the network management system manages, through the CIM management application mechanism, the DHCP agent which implements the DHCP agent class, so as to implement the configuration and management on the DHCP agent.

In an example embodiment, the DHCP agent class comprises: a DHCP agent core class, a DHCP agent capability class associated with the DHCP agent core class and a DHCP agent setting class associated with the DHCP agent core class.

In an example embodiment, the DHCP agent core class at least comprises the following parameters: one or more IP addresses of the DHCP server, the allocable IP address segment, the default lease time and the capability of the DHCP client.

In an example embodiment, the DHCP agent class further comprises: a client class used for representing the DHCP client, wherein the client class may be used for batch address application, and the client class comprises at least one of the following parameters: the identifier of the DHCP client, the state of the allocated address , the allocated address , the type of the allocated address, the lease time of the allocated address and the obtained batch IP addresses of the DHCP client.

In an example embodiment, the DHCP agent capability class at least comprises the following parameters: a supporting capability of an IPv4/IPv6 and a supporting capability of an agent.

In an example embodiment, the DHCP agent class comprises: a DHCP service statistics class, and the DHCP service statistics class comprises at least one of the following parameters:
the number of the IP addresses requested, the number of the IP addresses allocated and the obtained batch IP addresses.

Obviously, those skilled in the art should know that each component or step of the embodiment of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, or may form each integrated circuit component respectively, or multiple components or steps therein can form a single integrated circuit component for implementation. As a consequence, the present disclosure is not limited to any specific hardware and software combination.

The above is only the example embodiment of the present disclosure and not intended to limit the present disclosure, and for those skilled in the art, the present disclosure may have various modifications and variations.

### Industrial Applicability

The technical solutions provided by the embodiment of the present disclosure may be applied to the field of communication, the problem caused by the fact that at least one of the DHCP server configuration and/or the DHCP relay configuration is implemented by manual configuration in the related art is solved, and configuration efficiency is improved.

## Claims

1. A method for managing a Dynamic Host Configuration Protocol, DHCP, server, comprising:
defining a Common Information Model, CIM-based DHCP server class; and
a network management system configuring and managing, by a CIM management application mechanism, the DHCP server which implements the DHCP server class;
wherein the DHCP server class comprises: a DHCP server core class, a DHCP server capability class and a DHCP server setting class, and the DHCP server capability class and the DHCP server setting class are associated with the DHCP server core class; the DHCP server core class at least comprises following parameters: one or more Internet Protocol, IP, addresses of the DHCP server, an allocable IP address segment and default lease time.

2. The method as claimed in claim 1, wherein
the DHCP server capability class at least comprises a following parameter: a supporting capability of an Internet Protocol version 4/lnternet Protocol version 6, IPv4/IPv6.

3. The method as claimed in claim 1, wherein the DHCP server class further comprises: a client class used for representing a DHCP client, wherein the client class comprises at least one of following parameters: an identifier of the DHCP client, a state of the allocated address, an allocated address, a type of the allocated address and lease time of the allocated address.

4. The method as claimed in claim 1, wherein the DHCP server class comprises:
a DHCP service statistics class, the DHCP service statistics class comprising at least one of following parameters:
the number of IP addresses requested and the number of IP addresses allocated.

5. The method as claimed in any one of claims 1 to 4, further comprising:
defining a CIM-based DHCP relay class; and
the network management system configuring and managing, by the CIM management application mechanism, a DHCP relay which implements the DHCP relay class, wherein the DHCP relay is configured to implement message forwarding between a DHCP client and the DHCP server.

6. The method as claimed in claim 6, wherein the DHCP relay class comprises: a DHCP relay core class, a DHCP relay capability class and a DHCP relay setting class, and the DHCP relay capability class and the DHCP relay setting class are associated with the DHCP relay core class.

7. The method as claimed in claim 6, wherein
the DHCP relay core class comprises at least one of following parameters: an address of the DHCP relay, a supporting capability of a unicast and/or broadcast and an address of the DHCP server; or
the DHCP relay capability class at least comprises a following parameter: a supporting capability of an IPv4/IPv6.

8. The method as claimed in any one of claims 6 to 7, wherein the DHCP relay class further comprises: a DHCP relay statistics class used for representing statistical data of the DHCP relay, the DHCP relay statistics class comprising at least one of following parameters: a relay interface, information of a network address of the relay interface, usage information of the relay interface and statistical information of DHCP messages.

9. A method for managing a Dynamic Host Configuration Protocol, DHCP, relay, comprising:
defining a Common Information Model, CIM-based DHCP relay class; and
a network management system configuring and managing, by a CIM management application mechanism, the DHCP relay which implements the DHCP relay class, wherein the DHCP relay is configured to implement message forwarding between a DHCP client and a DHCP server;
wherein the DHCP relay class comprises a DHCP relay core class, a DHCP relay capability class and a DHCP relay setting class, and the DHCP relay capability class and the DHCP relay setting class are associated with the DHCP relay core class; the DHCP relay core class comprises at least one of following parameters: an address of a DHCP relay, a capability of supporting a unicast and/or broadcast and an address of the DHCP server.

10. A method for managing a Dynamic Host Configuration Protocol, DHCP, server, comprising:
implementing, on the DHCP server, a DHCP server class, wherein the DHCP server class is defined based on a Common Information Model, CIM; and
receiving configuration and management on the DHCP server which implements the DHCP server class, wherein the configuration and the management are performed by a network management system by a CIM management application mechanism;
wherein the DHCP server class comprises a DHCP server core class, a DHCP server capability class and a DHCP server setting class, and the DHCP server capability class and the DHCP server setting class are associated with the DHCP server core class; the DHCP server core class at least comprises following parameters: one or more Internet Protocol, IP, addresses of the DHCP server, an allocable IP address segment and default lease time.

11. A method for managing a Dynamic Host Configuration Protocol, DHCP, relay, comprising:
implementing, on the DHCP relay, a DHCP relay class, wherein the DHCP relay class is defined based on a Common Information Model, CIM; and
receiving configuration and management on the DHCP relay which implements the DHCP relay class, wherein the configuration and the management are performed by a network management system by a CIM management application mechanism;
wherein the DHCP relay class comprises a DHCP relay core class, a DHCP relay capability class and a DHCP relay setting class, and the DHCP relay capability class and the DHCP relay setting class are associated with the DHCP relay core class; the DHCP relay core class comprises at least one of following parameters: an address of a DHCP relay, a capability of supporting a unicast and/or broadcast and an address of the DHCP server.

12. A network management system, comprising:
a communicating component, configured to communicate with a Dynamic Host Configuration Protocol, DHCP, server and/or a DHCP relay; and
a configuring and managing component, configured to configure and manage, by a Common Information Model, CIM, management application mechanism, at least one of: the DHCP server which is configured to implement a DHCP server class, the DHCP relay which is configured to implement a DHCP relay class and a DHCP agent which is configured to implement a DHCP server class supporting a DHCP agent function, wherein the DHCP server class, the DHCP relay class and/or the DHCP server class supporting the DHCP agent function are defined based on a CIM;
wherein the DHCP server class comprises a DHCP server core class, a DHCP server capability class and a DHCP server setting class, and the DHCP server capability class and the DHCP server setting class are associated with the DHCP server core class; the DHCP server core class at least comprises following parameters: one or more Internet Protocol, IP, addresses of the DHCP server, an allocable IP address segment and default lease time;
wherein the DHCP relay class comprises a DHCP relay core class, a DHCP relay capability class and a DHCP relay setting class, and the DHCP relay capability class and the DHCP relay setting class are associated with the DHCP relay core class.

13. A Dynamic Host Configuration Protocol, DHCP, server, comprising:
a communicating component, configured to communicate with a network management system;
a configuring and managing component, configured to receive configuration and management on the DHCP server by a DHCP server class implemented on the DHCP server, wherein the DHCP server class is defined based on a Common Information Model, CIM, wherein the DHCP server class comprises a DHCP server core class, a DHCP server capability class and a DHCP server setting class, and the DHCP server capability class and the DHCP server setting class are associated with the DHCP server core class; the DHCP server core class at least comprises following parameters: one or more Internet Protocol, IP, addresses of the DHCP server, an allocable IP address segment and default lease time; and
a processing component, configured to realize a function of the DHCP server.

14. A Dynamic Host Configuration Protocol, DHCP, relay, comprising:
a communicating component, configured to communicate with a network management system;
a configuring and managing component, configured to receive configuration and management on the DHCP relay by a DHCP relay class implemented on the DHCP relay, wherein the DHCP relay class is defined based on a Common Information Model, CIM, wherein the DHCP relay class comprises a DHCP relay core class, a DHCP relay capability class and a DHCP relay setting class, and the DHCP relay capability class and the DHCP relay setting class are associated with the DHCP relay core class; the DHCP relay core class comprises at least one of following parameters: an address of a DHCP relay, a capability of supporting a unicast and/or broadcast and an address of the DHCP server; and
a processing component, configured to realize a function of the DHCP relay.

15. A method for managing a Dynamic Host Configuration Protocol, DHCP, agent, comprising:
defining an CIM-based DHCP server class, wherein the DHCP server class supports a capability of the DHCP agent; and
a network management system configuring and managing, by a Common Information Model, CIM, management application mechanism, the DHCP agent which implements the DHCP server class;
wherein the DHCP server class comprises a DHCP server core class, a DHCP server capability class and a DHCP server setting class, and the DHCP server capability class and the DHCP server setting class are associated with the DHCP server core class; the DHCP server core class at least comprises following parameters: one or more Internet Protocol, IP, addresses of the DHCP server, an allocable IP address segment and default lease time.

16. A Dynamic Host Configuration Protocol, DHCP, agent, comprising:
a communicating component, configured to communicate with a network management system;
a configuring and managing component, configured to receive configuration and management on the DHCP agent by a DHCP server class implemented on the DHCP agent, wherein the DHCP server class is defined based on a Common Information Model, CIM, and the DHCP server class supports a supporting capability of the DHCP agent; and
a processing component, configured to realize a function of the DHCP agent;
wherein the DHCP server class comprises a DHCP server core class, a DHCP server capability class and a DHCP server setting class, and the DHCP server capability class and the DHCP server setting class are associated with the DHCP server core class; the DHCP server core class at least comprises following parameters: one or more Internet Protocol, IP, addresses of the DHCP server, an allocable IP address segment and default lease time.

## Patentansprüche

1. Verfahren zum Verwalten eines Dynamic Host Configuration Protocol-, DHCP, Servers, umfassend:
Definieren einer Common Information Model-, CIM, basierten DHCP-Serverklasse; und
Konfigurieren und Verwalten, durch ein Netzwerkverwaltungssystem mittels eines CIM-Verwaltungsanwendungsmechanismus, des DHCP-Servers, der die DHCP-Serverklasse implementiert;
wobei die DHCP-Serverklasse umfasst: eine DHCP-Server-Kernklasse, eine DHCP-Server-Fähigkeitsklasse und eine DHCP-Server-Einrichtungsklasse, und die DHCP-Server-Fähigkeitsklasse und die DHCP-Server-Einrichtungsklasse mit der DHCP-Server-Kernklasse verknüpft sind; die DHCP-Server-Kernklasse mindestens folgende Parameter umfasst: eine oder mehrere Internet Protocol-, IP, Adressen des DHCP-Servers, ein IP-Adresssegment, das zugewiesen werden kann, und Standard-Lease-Zeit.

2. Verfahren nach Anspruch 1, wobei
die DHCP-Server-Fähigkeitsklasse mindestens einen folgenden Parameter umfasst: eine Unterstützungsfähigkeit eines Internet Protocol Version 4/Internet Protocol Version 6, IPv4/IPv6.

3. Verfahren nach Anspruch 1, wobei die DHCP-Serverklasse weiter umfasst: eine Client-Klasse, die dafür verwendet wird, einen DHCP-Client darzustellen, wobei die Client-Klasse mindestens einen aus folgenden Parametern umfasst: eine Kennung des DHCP-Clients, einen Zustand der zugewiesenen Adresse, eine zugewiesene Adresse, einen Typ der zugewiesenen Adresse, und Lease-Zeit der zugewiesenen Adresse.

4. Verfahren nach Anspruch 1, wobei die DHCP-Serverklasse umfasst: eine DHCP-Dienst-Statistikklasse, wobei die DHCP-Dienst-Statistikklasse mindestens einen aus folgenden Parametern umfasst:
die Anzahl von angeforderten IP-Adressen und die Anzahl von zugewiesenen IP-Adressen.

5. Verfahren nach einem der Ansprüche 1 bis 4, weiter umfassend:
Definieren einer CIM-basierten DHCP-Relaisklasse; und
Konfigurieren und Verwalten, durch das Netzwerkverwaltungssystem mittels des CIM-Verwaltungsanwendungsmechanismus, eines DHCP-Relais, das die DHCP-Relaisklasse implementiert, wobei das DHCP-Relais dazu konfiguriert ist, Nachrichtenweiterleitung zwischen einem DHCP-Client und dem DHCP-Server zu implementieren.

6. Verfahren nach Anspruch 6, wobei die DHCP-Relaisklasse umfasst: eine DHCP-Relais-Kernklasse, eine DHCP-Relais-Fähigkeitsklasse und eine DHCP-Relais-Einrichtungsklasse, und die DHCP-Relais-Fähigkeitsklasse und die DHCP-Relais-Einrichtungsklasse mit der DHCP-Relais-Kernklasse verknüpft sind.

7. Verfahren nach Anspruch 6, wobei
die DHCP-Relais-Kernklasse mindestens einen aus folgenden Parametern umfasst: eine Adresse des DHCP-Relais, eine Unterstützungsfähigkeit eines Unicast und/oder Broadcast und eine Adresse des DHCP-Servers; oder
die DHCP-Relais-Fähigkeitsklasse mindestens einen folgenden Parameter umfasst: eine Unterstützungsfähigkeit eines IPv4/IPv6.

8. Verfahren nach einem der Ansprüche 6 bis 7, wobei die DHCP-Relaisklasse weiter umfasst: eine DHCP-Relais-Statistikklasse, die dafür verwendet wird, statistische Daten des DHCP-Relais darzustellen, wobei die DHCP-Relais-Statistikklasse mindestens einen aus folgenden Parametern umfasst: eine Relaisschnittstelle, Informationen über eine Netzwerkadresse der Relaisschnittstelle, Verwendungsinformationen der Relaisschnittstelle und statistische Informationen über DHCP-Nachrichten.

9. Verfahren zum Verwalten eines Dynamic Host Configuration Protocol-, DHCP, Relais, umfassend:
Definieren einer Common Information Model-, CIM, basierten DHCP-Relaisklasse; und
Konfigurieren und Verwalten, durch ein Netzwerkverwaltungssystem mittels eines CIM-Verwaltungsanwendungsmechanismus, des DHCP-Relais, das die DHCP-Relaisklasse implementiert, wobei das DHCP-Relais dazu konfiguriert ist, Nachrichtenweiterleitung zwischen einem DHCP-Client und einem DHCP-Server zu implementieren;
wobei die DHCP-Relaisklasse eine DHCP-Relais-Kernklasse, eine DHCP-Relais-Fähigkeitsklasse und eine DHCP-Relais-Einrichtungsklasse umfasst, und die DHCP-Relais-Fähigkeitsklasse und die DHCP-Relais-Einrichtungsklasse mit der DHCP-Relais-Kernklasse verknüpft sind; die DHCP-Relais-Kernklasse mindestens einen aus folgenden Parametern umfasst: eine Adresse eines DHCP-Relais, eine Fähigkeit, ein Unicast und/oder Broadcast zu unterstützen, und eine Adresse des DHCP-Servers.

10. Verfahren zum Verwalten eines Dynamic Host Configuration Protocol-, DHCP, Servers, umfassend:
Implementieren einer DHCP-Serverklasse auf dem DHCP-Server, wobei die DHCP-Serverklasse auf Basis eines Common Information Model, CIM, definiert wird; und
Empfangen von Konfiguration und Verwaltung auf dem DHCP-Server, der die DHCP-Serverklasse implementiert, wobei die Konfiguration und die Verwaltung von einem Netzwerkverwaltungssystem mittels eines CIM-Verwaltungsanwendungsmechanismus durchgeführt werden;
wobei die DHCP-Serverklasse eine DHCP-Server-Kernklasse, eine DHCP-Server-Fähigkeitsklasse und eine DHCP-Server-Einrichtungsklasse umfasst, und die DHCP-Server-Fähigkeitsklasse und die DHCP-Server-Einrichtungsklasse mit der DHCP-Server-Kernklasse verknüpft sind; die DHCP-Server-Kernklasse mindestens folgende Parameter umfasst: eine oder mehrere Internet Protocol-, IP, Adressen des DHCP-Servers, ein IP-Adresssegment, das zugewiesen werden kann, und Standard-Lease-Zeit.

11. Verfahren zum Verwalten eines Dynamic Host Configuration Protocol-, DHCP, Relais, umfassend:
Implementieren einer DHCP-Relaisklasse auf dem DHCP-Relais, wobei die DHCP-Relaisklasse auf Basis eines Common Information Model, CIM, definiert wird; und
Empfangen von Konfiguration und Verwaltung auf dem DHCP-Relais, das die DHCP-Relaisklasse implementiert, wobei die Konfiguration und die Verwaltung von einem Netzwerkverwaltungssystem mittels eines CIM-Verwaltungsanwendungsmechanismus durchgeführt werden;
wobei die DHCP-Relaisklasse eine DHCP-Relais-Kernklasse, eine DHCP-Relais-Fähigkeitsklasse und eine DHCP-Relais-Einrichtungsklasse umfasst, und die DHCP-Relais-Fähigkeitsklasse und die DHCP-Relais-Einrichtungsklasse mit der DHCP-Relais-Kernklasse verknüpft sind; die DHCP-Relais-Kernklasse mindestens einen aus folgenden Parametern umfasst: eine Adresse eines DHCP-Relais, eine Fähigkeit, ein Unicast und/oder Broadcast zu unterstützen, und eine Adresse des DHCP-Servers.

12. Netzwerkverwaltungssystem, umfassend:
eine Kommunikationskomponente, die dazu konfiguriert ist, mit einem Dynamic Host Configuration Protocol-, DHCP, Server und/oder einem DHCP-Relais zu kommunizieren; und
eine Konfigurations- und Verwaltungskomponente, die dazu konfiguriert ist, mittels eines Common Information Model-, CIM, Verwaltungsanwendungsmechanismus mindestens eines zu konfigurieren und zu verwalten aus: dem DHCP-Server, der dazu konfiguriert ist, eine DHCP-Serverklasse zu implementieren, dem DHCP-Relais, das dazu konfiguriert ist, eine DHCP-Relaisklasse zu implementieren, und einem DHCP-Agenten, der dazu konfiguriert ist, eine DHCP-Serverklasse zu implementieren, die eine DHCP-Agentenfunktion unterstützt, wobei die DHCP-Serverklasse, die DHCP-Relaisklasse und/oder die DHCP-Serverklasse, die die DHCP-Agentenfunktion unterstützt, auf Basis eines CIM definiert werden;
wobei die DHCP-Serverklasse eine DHCP-Server-Kernklasse, eine DHCP-Server-Fähigkeitsklasse und eine DHCP-Server-Einrichtungsklasse umfasst, und die DHCP-Server-Fähigkeitsklasse und die DHCP-Server-Einrichtungsklasse mit der DHCP-Server-Kernklasse verknüpft sind; die DHCP-Server-Kernklasse mindestens folgende Parameter umfasst: eine oder mehrere Internet Protocol-, IP, Adressen des DHCP-Servers, ein IP-Adresssegment, das zugewiesen werden kann, und Standard-Lease-Zeit;
wobei die DHCP-Relaisklasse eine DHCP-Relais-Kernklasse, eine DHCP-Relais-Fähigkeitsklasse und eine DHCP-Relais-Einrichtungsklasse umfasst, und die DHCP-Relais-Fähigkeitsklasse und die DHCP-Relais-Einrichtungsklasse mit der DHCP-Relais-Kernklasse verknüpft sind.

13. Dynamic Host Configuration Protocol-, DHCP, Server, umfassend:
eine Kommunikationskomponente, die dazu konfiguriert ist, mit einem Netzwerkverwaltungssystem zu kommunizieren;
eine Konfigurations- und Verwaltungskomponente, die dazu konfiguriert ist, Konfiguration und Verwaltung auf dem DHCP-Server mittels einer DHCP-Serverklasse zu empfangen, die auf dem DHCP-Server implementiert wird, wobei die DHCP-Serverklasse auf Basis eines Common Information Model, CIM, definiert wird, wobei die DHCP-Serverklasse eine DHCP-Server-Kernklasse, eine DHCP-Server-Fähigkeitsklasse und eine DHCP-Server-Einrichtungsklasse umfasst, und die DHCP-Server-Fähigkeitsklasse und die DHCP-Server-Einrichtungsklasse mit der DHCP-Server-Kernklasse verknüpft sind; die DHCP-Server-Kernklasse mindestens folgende Parameter umfasst: eine oder mehrere Internet Protocol-, IP, Adressen des DHCP-Servers, ein IP-Adresssegment, das zugewiesen werden kann, und Standard-Lease-Zeit; und
eine Verarbeitungskomponente, die dazu konfiguriert ist, eine Funktion des DHCP-Servers auszuführen.

14. Dynamic Host Configuration Protocol-, DHCP, Relais, umfassend:
eine Kommunikationskomponente, die dazu konfiguriert ist, mit einem Netzwerkverwaltungssystem zu kommunizieren;
eine Konfigurations- und Verwaltungskomponente, die dazu konfiguriert ist, Konfiguration und Verwaltung auf dem DHCP-Relais mittels einer DHCP-Relaisklasse zu empfangen, die auf dem DHCP-Relais implementiert wird, wobei die DHCP-Relaisklasse auf Basis eines Common Information Model, CIM, definiert wird, wobei die DHCP-Relaisklasse eine DHCP-Relais-Kernklasse, eine DHCP-Relais-Fähigkeitsklasse und eine DHCP-Relais-Einrichtungsklasse umfasst, und die DHCP-Relais-Fähigkeitsklasse und die DHCP-Relais-Einrichtungsklasse mit der DHCP-Relais-Kernklasse verknüpft sind; die DHCP-Relais-Kernklasse mindestens einen aus folgenden Parametern umfasst: eine Adresse eines DHCP-Relais, eine Fähigkeit, ein Unicast und/oder Broadcast zu unterstützen, und eine Adresse des DHCP-Servers; und
eine Verarbeitungskomponente, die dazu konfiguriert ist, eine Funktion des DHCP-Relais auszuführen.

15. Verfahren zum Verwalten eines Dynamic Host Configuration Protocol-, DHCP, Agenten, umfassend:
Definieren einer CIM-basierten DHCP-Serverklasse, wobei die DHCP-Serverklasse eine Fähigkeit des DHCP-Agenten unterstützt; und
Konfigurieren und Verwalten, durch ein Netzwerkverwaltungssystem mittels eines Common Information Model-, CIM, Verwaltungsanwendungsmechanismus, des DHCP-Agenten, der die DHCP-Serverklasse implementiert;
wobei die DHCP-Serverklasse eine DHCP-Server-Kernklasse, eine DHCP-Server-Fähigkeitsklasse und eine DHCP-Server-Einrichtungsklasse umfasst, und die DHCP-Server-Fähigkeitsklasse und die DHCP-Server-Einrichtungsklasse mit der DHCP-Server-Kernklasse verknüpft sind; die DHCP-Server-Kernklasse mindestens folgende Parameter umfasst: eine oder mehrere Internet Protocol-, IP, Adressen des DHCP-Servers, ein IP-Adresssegment, das zugewiesen werden kann, und Standard-Lease-Zeit.

16. Dynamic Host Configuration Protocol-, DHCP, Agent, umfassend:
eine Kommunikationskomponente, die dazu konfiguriert ist, mit einem Netzwerkverwaltungssystem zu kommunizieren;
eine Konfigurations- und Verwaltungskomponente, die dazu konfiguriert ist, Konfiguration und Verwaltung auf dem DHCP-Agenten mittels einer DHCP-Serverklasse zu empfangen, die auf dem DHCP-Agenten implementiert wird, wobei die DHCP-Serverklasse auf Basis eines Common Information Model, CIM, definiert wird, und die DHCP-Serverklasse eine Unterstützungsfähigkeit des DHCP-Agenten unterstützt; und
eine Verarbeitungskomponente, die dazu konfiguriert ist, eine Funktion des DHCP-Agenten auszuführen;
wobei die DHCP-Serverklasse eine DHCP-Server-Kernklasse, eine DHCP-Server-Fähigkeitsklasse und eine DHCP-Server-Einrichtungsklasse umfasst, und die DHCP-Server-Fähigkeitsklasse und die DHCP-Server-Einrichtungsklasse mit der DHCP-Server-Kernklasse verknüpft sind; die DHCP-Server-Kernklasse mindestens folgende Parameter umfasst: eine oder mehrere Internet Protocol-, IP, Adressen des DHCP-Servers, ein IP-Adresssegment, das zugewiesen werden kann, und Standard-Lease-Zeit.

## Revendications

1. Procédé pour gérer un serveur de protocole de configuration d'hôte dynamique, DHCP, comprenant :
la définition d'une classe de serveur DHCP basée sur un modèle d'information commun, CIM ; et
la configuration et la gestion, par un système de gestion de réseau, par un mécanisme d'application de gestion CIM, du serveur DHCP qui implémente la classe de serveur DHCP ;
dans lequel la classe de serveur DHCP comprend : une classe coeur de serveur DHCP, une classe de capacité de serveur DHCP et une classe d'établissement de serveur DHCP, et la classe de capacité de serveur DHCP et la classe d'établissement de serveur DHCP sont associées à la classe coeur de serveur DHCP ; la classe coeur de serveur DHCP comprend au moins des paramètres suivants : une ou plusieurs adresses de protocole Internet, IP, du serveur DHCP, un segment d'adresse IP allouable et une durée de bail par défaut.

2. Procédé selon la revendication 1, dans lequel la classe de capacité de serveur DHCP comprend au moins un paramètre suivant : une capacité de prise en charge d'un protocole Internet version 4/protocole Internet version 6, IPv4/IPv6.

3. Procédé selon la revendication 1, dans lequel la classe de serveur DHCP comprend en outre : une classe de client utilisée pour représenter un client DHCP, dans lequel la classe de client comprend au moins l'un des paramètres suivants : un identifiant du client DHCP, un état de l'adresse allouée, une adresse allouée, un type de l'adresse allouée et une durée de bail de l'adresse allouée.

4. Procédé selon la revendication 1, dans lequel la classe de serveur DHCP comprend : une classe de statistiques de service DHCP, la classe de statistiques de service DHCP comprenant au moins l'un des paramètres suivants :
le nombre d'adresses IP demandées et le nombre d'adresses IP allouées.

5. Procédé selon l'une quelconque des revendications 1 à 4, comprenant en outre :
la définition d'une classe de relais DHCP basée sur CIM ; et
la configuration et la gestion, par le système de gestion de réseau, par le mécanisme d'application de gestion CIM, d'un relais DHCP qui implémente la classe de relais DHCP, dans lequel le relais DHCP est configuré pour implémenter un transfert de message entre un client DHCP et le serveur DHCP.

6. Procédé selon la revendication 6, dans lequel la classe de relais DHCP comprend : une classe coeur de relais DHCP, une classe de capacité de relais DHCP et une classe d'établissement de relais DHCP, et la classe de capacité de relais DHCP et la classe d'établissement de relais DHCP sont associées à la classe coeur de relais DHCP.

7. Procédé selon la revendication 6, dans lequel la classe coeur de relais DHCP comprend au moins l'un des paramètres suivants : une adresse du relais DHCP, une capacité de prise en charge d'une diffusion individuelle et/ou d'une diffusion générale et une adresse du serveur DHCP ; ou
la classe de capacité de relais DHCP comprend au moins un paramètre suivant : une capacité de prise en charge d'un IPv4/IPv6.

8. Procédé selon l'une quelconque des revendications 6 à 7, dans lequel la classe de relais DHCP comprend en outre : une classe de statistiques de relais DHCP utilisée pour représenter des données statistiques du relais DHCP, la classe de statistiques de relais DHCP comprenant au moins l'un des paramètres suivants : une interface de relais, des informations d'une adresse réseau de l'interface de relais, des informations d'utilisation de l'interface de relais et des informations statistiques de messages DHCP.

9. Procédé pour gérer un relais de protocole de configuration d'hôte dynamique, DHCP, comprenant :
la définition d'une classe de relais DHCP basée sur un modèle d'information commun, CIM ; et
la configuration et la gestion, par un système de gestion de réseau, par un mécanisme d'application de gestion CIM, du relais DHCP qui implémente la classe de relais DHCP, dans lequel le relais DHCP est configuré pour implémenter un transfert de message entre un client DHCP et un serveur DHCP ;
dans lequel la classe de relais DHCP comprend une classe coeur de relais DHCP, une classe de capacité de relais DHCP et une classe d'établissement de relais DHCP, et la classe de capacité de relais DHCP et la classe d'établissement de relais DHCP sont associées à la classe coeur de relais DHCP ; la classe coeur de relais DHCP comprend au moins l'un des paramètres suivants : une adresse d'un relais DHCP, une capacité de prise en charge d'une diffusion individuelle et/ou d'une diffusion générale et une adresse du serveur DHCP.

10. Procédé pour gérer un serveur de protocole de configuration d'hôte dynamique, DHCP, comprenant :
l'implémentation, sur le serveur DHCP, d'une classe de serveur DHCP, dans lequel la classe de serveur DHCP est définie sur la base d'un modèle d'information commun, CIM ; et
la réception d'une configuration et d'une gestion sur le serveur DHCP qui implémente la classe de serveur DHCP, dans lequel la configuration et la gestion sont effectuées par un système de gestion de réseau par un mécanisme d'application de gestion CIM ;
dans lequel la classe de serveur DHCP comprend une classe coeur de serveur DHCP, une classe de capacité de serveur DHCP et une classe d'établissement de serveur DHCP, et la classe de capacité de serveur DHCP et la classe d'établissement de serveur DHCP sont associées à la classe coeur de serveur DHCP ; la classe coeur de serveur DHCP comprend au moins des paramètres suivants : une ou plusieurs adresses de protocole Internet, IP, du serveur DHCP, un segment d'adresse IP allouable et une durée de bail par défaut.

11. Procédé pour gérer un relais de protocole de configuration d'hôte dynamique, DHCP, comprenant :
l'implémentation, sur le relais DHCP, d'une classe de relais DHCP, dans lequel la classe de relais DHCP est définie sur la base d'un modèle d'information commun, CIM ; et
la réception d'une configuration et d'une gestion sur le relais DHCP qui implémente la classe de relais DHCP, dans lequel la configuration et la gestion sont effectuées par un système de gestion de réseau par un mécanisme d'application de gestion CIM ;
dans lequel la classe de relais DHCP comprend une classe coeur de relais DHCP, une classe de capacité de relais DHCP et une classe d'établissement de relais DHCP, et la classe de capacité de relais DHCP et la classe d'établissement de relais DHCP sont associées à la classe coeur de relais DHCP ; la classe coeur de relais DHCP comprend au moins l'un des paramètres suivants : une adresse d'un relais DHCP, une capacité de prise en charge d'une diffusion individuelle et/ou d'une diffusion générale et une adresse du serveur DHCP.

12. Système de gestion de réseau, comprenant :
un composant de communication, configuré pour communiquer avec un serveur de protocole de configuration d'hôte dynamique, DHCP, et/ou un relais DHCP ; et
un composant de configuration et de gestion, configuré pour configurer et gérer, par un mécanisme d'application de gestion de modèle d'information commun, CIM, au moins l'un parmi : le serveur DHCP qui est configuré pour implémenter une classe de serveur DHCP, le relais DHCP qui est configuré pour implémenter une classe de relais DHCP et un agent DHCP qui est configuré pour implémenter une classe de serveur DHCP prenant en charge une fonction d'agent DHCP, dans lequel la classe de serveur DHCP, la classe de relais DHCP et/ou la classe de serveur DHCP prenant en charge la fonction d'agent DHCP sont définies sur la base d'un CIM ;
dans lequel la classe de serveur DHCP comprend une classe coeur de serveur DHCP, une classe de capacité de serveur DHCP et une classe d'établissement de serveur DHCP, et la classe de capacité de serveur DHCP et la classe d'établissement de serveur DHCP sont associées à la classe coeur de serveur DHCP ; la classe coeur de serveur DHCP comprend au moins des paramètres suivants : une ou plusieurs adresses de protocole Internet, IP, du serveur DHCP, un segment d'adresse IP allouable et une durée de bail par défaut ;
dans lequel la classe de relais DHCP comprend une classe coeur de relais DHCP, une classe de capacité de relais DHCP et une classe d'établissement de relais DHCP, et la classe de capacité de relais DHCP et la classe d'établissement de relais DHCP sont associées à la classe coeur de relais DHCP.

13. Serveur de protocole de configuration d'hôte dynamique, DHCP, comprenant :
un composant de communication, configuré pour communiquer avec un système de gestion de réseau ;
un composant de configuration et de gestion, configuré pour recevoir une configuration et une gestion sur le serveur DHCP par une classe de serveur DHCP implémentée sur le serveur DHCP, dans lequel la classe de serveur DHCP est définie sur la base d'un modèle d'information commun, CIM, dans lequel la classe de serveur DHCP comprend une classe coeur de serveur DHCP, une classe de capacité de serveur DHCP et une classe d'établissement de serveur DHCP, et la classe de capacité de serveur DHCP et la classe d'établissement de serveur DHCP sont associées à la classe coeur de serveur DHCP ; la classe coeur de serveur DHCP comprend au moins des paramètres suivants : une ou plusieurs adresses de protocole Internet, IP, du serveur DHCP, un segment d'adresse IP allouable et une durée de bail par défaut ; et
un composant de traitement, configuré pour réaliser une fonction du serveur DHCP.

14. Relais de protocole de configuration d'hôte dynamique, DHCP, comprenant :
un composant de communication, configuré pour communiquer avec un système de gestion de réseau ;
un composant de configuration et de gestion, configuré pour recevoir une configuration et une gestion sur le relais DHCP par une classe de relais DHCP implémentée sur le relais DHCP, dans lequel la classe de relais DHCP est définie sur la base d'un modèle d'information commun, CIM, dans lequel la classe de relais DHCP comprend une classe coeur de relais DHCP, une classe de capacité de relais DHCP et une classe d'établissement de relais DHCP, et la classe de capacité de relais DHCP et la classe d'établissement de relais DHCP sont associées à la classe coeur de relais DHCP ; la classe coeur de relais DHCP comprend au moins l'un des paramètres suivants : une adresse d'un relais DHCP, une capacité de prise en charge d'une diffusion individuelle et/ou d'une diffusion générale et une adresse du serveur DHCP ; et
un composant de traitement, configuré pour réaliser une fonction du relais DHCP.

15. Procédé pour gérer un agent de protocole de configuration d'hôte dynamique, DHCP, comprenant :
la définition d'une classe de serveur DHCP basée sur CIM, dans lequel la classe de serveur DHCP prend en charge une capacité de l'agent DHCP ; et
la configuration et la gestion, par un système de gestion de réseau, par un mécanisme d'application de gestion de modèle d'information commun, CIM, de l'agent DHCP qui implémente la classe de serveur DHCP ;
dans lequel la classe de serveur DHCP comprend une classe coeur de serveur DHCP, une classe de capacité de serveur DHCP et une classe d'établissement de serveur DHCP, et la classe de capacité de serveur DHCP et la classe d'établissement de serveur DHCP sont associées à la classe coeur de serveur DHCP ; la classe coeur de serveur DHCP comprend au moins des paramètres suivants : une ou plusieurs adresses de protocole Internet, IP, du serveur DHCP, un segment d'adresse IP allouable et une durée de bail par défaut.

16. Agent de protocole de configuration d'hôte dynamique, DHCP, comprenant :
un composant de communication, configuré pour communiquer avec un système de gestion de réseau ;
un composant de configuration et de gestion, configuré pour recevoir une configuration et une gestion sur l'agent DHCP par une classe de serveur DHCP implémentée sur l'agent DHCP, dans lequel la classe de serveur DHCP est définie sur la base d'un modèle d'information commun, CIM, et la classe de serveur DHCP prend en charge une capacité de prise en charge de l'agent DHCP ; et
un composant de traitement, configuré pour réaliser une fonction de l'agent DHCP ;
dans lequel la classe de serveur DHCP comprend une classe coeur de serveur DHCP, une classe de capacité de serveur DHCP et une classe d'établissement de serveur DHCP, et la classe de capacité de serveur DHCP et la classe d'établissement de serveur DHCP sont associées à la classe coeur de serveur DHCP ; la classe coeur de serveur DHCP comprend au moins des paramètres suivants : une ou plusieurs adresses de protocole Internet, IP, du serveur DHCP, un segment d'adresse IP allouable et une durée de bail par défaut.
